# EUROPÄISCHE PATENTSCHRIFT

(11) **EP 1 752 691 B1**
(45) Veröffentlichungstag und Bekanntmachung des Hinweises auf die Patenterteilung: **15.10.2008**
(21) Anmeldenummer: 06015640.3
(22) Anmeldetag: 27.07.2006
(51) Int. Cl.: F16K 31/06, F01L 1/344

(54) **Steuerventil und Verfahren zur Herstellung desselben**
Control spool valve and its manufacturing process
Vanne de commande et son procédé de fabrication

(30) Priorität: 09.08.2005 DE 102005037480
(43) Veröffentlichungstag der Anmeldung: 14.02.2007
(73) Patentinhaber: Schaeffler KG, 91074 Herzogenaurach (DE)
(72) Erfinder: Hoppe, Jens, 91056 Erlangen (DE); Röhr, Andreas, 91336 Heroldsbach (DE)

(56) Entgegenhaltungen:
- EP-A2- 1 158 230
- DE-A1- 10 029 261
- DE-A1- 10 230 966
- DE-A1- 10 238 602
- DE-A1- 19 616 973
- DE-A1- 19 727 180
- DE-A1- 19 938 884
- US-A- 5 205 249

## Beschreibung

### Gebiet der Erfindung

Die Erfindung betrifft ein Steuerventil für eine Beeinflussung der Beaufschlagung eines Nockenwellenverstellers einer Brennkraftmaschine mit einem Druckmittel, insbesondere gemäß dem Oberbegriff des Anspruchs 1. Weiterhin betrifft die Erfindung ein Verfahren zur Herstellung eines Steuerventils.

### Hintergrund der Erfindung

Aus der nicht vorveröffentlichten Patentanmeldung DE 10 2004 036 096.0 der Anmelderin ist ein Steuerventil für eine Beeinflussung der Beaufschlagung eines Nockenwellenverstellers einer Brennkraftmaschine mit einem Druckmittel bekannt, bei dem in einer Sacklochbohrung eines Ventilgehäuses ein Steuerkolben axial verschiebbar ist, wobei mit einer Verschiebung des Steuerkolbens die Beaufschlagung eines Federelements verändert wird. Das Federelement stützt sich mit einem Fußpunkt an einer Stirnseite des Steuerkolbens ab sowie mit dem gegenüberliegenden Fußpunkt an dem Grund der Sacklochbohrung des Ventilgehäuses. Das Steuerventil verfügt über einen Druckmittelanschluss, zwei Tankanschlüsse und zwei Arbeitsanschlüsse, die entgegengesetzt wirkenden Arbeitskammern eines hydraulischen Nockenwellenverstellers zugeordnet sind. In einer axialen Position des Steuerkolbens ist in dem Steuerventil ein erster Arbeitsanschluss mit einem Tankanschluss und der zweite Arbeitsanschluss mit dem Druckmittelanschluss verbunden, so dass eine Stellbewegung des Nockenwellenverstellers herbeiführbar ist, bei der die dem zweiten Arbeitsanschluss zugeordnete Arbeitskammer ihr Volumen vergrößert. In einer anderen axialen Position des Steuerkolbens ist der zweite Arbeitsanschluss mit einem Tankanschluss verbunden und der erste Arbeitsanschluss mit dem Druckmittelanschluss verbunden, so dass eine Stellbewegung herbeiführbar ist, bei der die dem ersten Arbeitsanschluss zugeordnete Arbeitskammer ihr Volumen vergrößert.

DE 199 38 884 A1 betrifft ein Steuerventil mit einem Ventilgehäuse, bei dem ein Steuerkolben oder Ventilschieber mittels eines Proportionalmagneten gegen eine Druckfeder axial verschieblich ist. Nach Maßgabe der Position des Ventilschiebers können die hydraulischen Verbindungen zwischen einem Pumpenanschluss, Kammeranschlüssen A und B sowie einem Tankanschluss geschaffen werden. Die Feder, über die der Ventilschieber in Verschieberichtung abgeschützt ist, stützt sich an einem Sicherungs- oder Einstellring ab, der radial einfedernd in eine geeignete Nut einer Bohrung des Ventilgehäuses eingeklippst werden kann. Der Sicherungs- oder Einstellring 8 besitzt eine innere Bohrung, über welche eine Verbindung zu dem Tankanschluss geschaffen ist.

Auch bei der aus DE 102 30 966 A1 bekannten Ausführungsform ist ein Steuerkolben unter Zwischenschaltung einer Druckfeder an einem Stützelement abgestützt, welches als Sicherungsring ausgebildet ist, der in einer Ringnut des Ventilgehäuses einschnappen kann.

Gemäß DE 197 27 180 C2 stützt sich eine Druckfeder auf einer einem Steuerkolben abgewandten Seite an einer Scheibe ab, welche über einen Presssitz in der Steuerbohrung des Steuerventils gehalten ist.

Für die aus DE 100 29 261 A1 bekannte Ausführungsform stützt sich eine auf einen Steuerkolben einwirkende Feder an einem Steuerventilkörperdeckel ab, der starr ist und axial verschieblich in die Steuerbohrung eingeführt werden kann. Eine axiale Sicherung des Steuerventilkörperdeckels erfolgt über einen Sicherungsring, der in einer Nut der Steuerbohrung eingeklippst werden kann.

Aus EP 1 158 230 B1 ist ein elektromagnetisches Druckregelventil bekannt, welches nicht für die Beeinflussung der Beaufschlagung eines Nockenwellenverstellers einer Brennkraftmaschine mit einem Druckmittel geeignet ist, da dieses Druckregelventil keinen Druckmittelanschluss, keinen Tankanschluss sowie keine zwei Arbeitsanschlüsse aufweist und nicht in einer axialen Position des Steuerkolbens ein erster Arbeitsanschluss mit dem oder einem Tankanschluss und der zweite Arbeitsanschluss mit dem Druckmittelanschluss verbindbar ist sowie nicht für eine andere axiale Position des Steuerkolbens der zweite Arbeitsanschluss mit dem oder einem Tankanschluss und der erste Arbeitsanschluss mit dem Druckmittelanschluss verbindbar ist. Das elektromagnetische Druckregelventil besitzt allerdings ebenfalls eine Feder, an welcher ein Steuerkolben abgestützt ist. Das dem Steuerkolben gegenüber liegende Ende der Feder stützt sich an einem kappen-, hut oder topfartigen Gehäuseeinsatz ab, der allerdings unter radialer Komprimierung reibschlüssig in eine Bohrung des Gehäuses eingesetzt ist. In diesem Fall ist der Gehäuseeinsatz ohne Ausnehmungen ausgebildet, wobei der zwischen dem Endbereich des Steuerkolbens und dem Gehäuseeinsatz angeordnete Zwischenraum nicht mit dem Hydraulikmedium des elektromagnetischen Druckregelventils in Verbindung kommt.

Auch US 5,205,249 offenbart einen kappenartigen Gehäuseeinsatz, an dem sich eine Feder für einen Steuerkolben abstützt und der unter radialer Komprimierung reibschlüssig in eine Steuerbohrung des Ventilgehäuses eingesetzt ist.

### Aufgabe der Erfindung

Der Erfindung liegt die Aufgabe zugrunde, unter weiterer Gewährleistung oder Verbesserung der Funktionen des eingangs erwähnten Steuerventils dessen Herstellung zu vereinfachen.

### Zusammenfassung der Erfindung

Erfindungsgemäß wird die Aufgabe durch ein Steuerventil entsprechend den Merkmalen des unabhängigen Patentanspruchs 1 gelöst. Bevorzugte Ausgestaltungen eines erfindungsgemäßen Steuerventils ergeben sich entsprechend den Merkmalen der abhängigen Patentansprüche 2 bis 7. Eine weitere Lösung der der Erfindung zugrunde liegenden Aufgabe ist durch ein Verfahren gemäß dem unabhängigen Patentanspruch 8 gegeben. Ausgestaltungen des erfindungsgemäßen Verfahrens ergeben sich aus den abhängigen Patentansprüchen 9 und 10.

Der Erfindung liegt die Erkenntnis zugrunde, dass eine Fertigung des Ventilgehäuses mit einer Sacklochbohrung zur Aufnahme des Steuerkolbens Optimierungspotential beinhaltet. Eine ungenaue Fertigung der Position eines Grundes der Sacklochbohrung entsprechend dem Stand der Technik kann u. U. die Funktion des Steuerventils, beispielsweise den Fußpunkt eines Federelements, eine Endlage des Steuerkolbens und/oder die hydraulischen Verhältnisse beeinflussen, weshalb eine Fertigung der Sacklochbohrung mit einer hohen Genauigkeit erfordern muss. Zusätzlich kann es erforderlich sein, dass der Grund der Sacklochbohrung eine zusätzliche Öffnung aufweisen muss, die einen Anschluss, beispielsweise einen Tankanschluss, bildet und für deren Herstellung eine weitere Bohrung in das Ventilgehäuse im Bereich des Grundes der Sacklochbohrung eingebracht werden muss. Hierbei müssen im Inneren des Ventilgehäuses, welches bei Ausbildung mit einer Sacklochbohrung nur einseitig vollständig offen ist, Verunreinigungen und Grate sorgfältig vermieden werden, da diese im Betrieb des Steuerventils zu mechanischen Beeinträchtigungen, erhöhtem Verschleiß bis zu einem Versagen des Steuerventils oder von mit dem Steuerventil hydraulisch verbundenen Bauteilen führen können. Andererseits erfordert die Herstellung eines Sacklochs den Einsatz eines besonderen Werkzeugs, insbesondere einer Reibahle, die beispielsweise einen zusätzlichen Freistich im Bereich des Grunds der Sacklochbohrung erforderlich macht.

Hierdurch ist u. U. eine erhöhte Baulänge des Steuerventils bedingt. Weiterhin ist durch die Form der Stirnfläche des Werkzeugs die Form des erzielbaren Grunds der Sacklochbohrung vorgegeben, so dass eine Integration von weiteren Funktionen in den Grund der Sacklochbohrung u. U. nur erschwert möglich ist. Beispielsweise kann durch den Grund der Sacklochbohrung keine Begrenzung der Stellbewegung des Steuerkolbens erfolgen. Eine derartige Begrenzung der Stellbewegung des Steuerkolbens ist aber von erhöhter Bedeutung, da beispielsweise bei Überschreiten einer vordefinierten Endlage des Steuerkolbens, beispielsweise infolge von Toleranzen der Bauelemente des Steuerventils, die hydraulische Verbindung zu einem Anschluss nur unzureichend geöffnet oder geschlossen wird. Bekannte Lösungen behelfen sich dadurch, dass ein Endanschlag des Steuerkolbens dadurch gegeben ist, dass das Federelement für ein Erreichen des Endanschlags "auf Block" geht, wobei die Endlage allerdings immer noch von den Toleranzen, auch zur Fertigung der Sacklochbohrung, abhängig ist.

Die zuvor erläuterten Erkenntnisse sind erfindungsgemäß dadurch umgesetzt, dass sich das Federelement nicht an einem Grund der Sacklochbohrung, sondern vielmehr mit dem dem Steuerkolben gegenüberliegenden Fußpunkt an einem Gehäuseeinsatz abstützt. Dieses bedeutet, dass das Ventilgehäuse einerseits und der Gehäuseeinsatz andererseits separat gefertigt werden können, wodurch
- weitere Fertigungsmöglichkeiten genutzt werden können,
- der Gehäuseeinsatz mit definierten Toleranzen hergestellt werden kann,
- die mechanischen Eigenschaften des Gehäuseeinsatzes gezielt gestaltet werden kann
- und die Geometrie des Gehäuseeinsatzes einen breiteren Gestaltungsspielraum aufweist als ein Grund einer Sacklochbohrung.

Die erfindungsgemäße Ausgestaltung mit einem Gehäuseeinsatz ermöglicht es beispielsweise, dass die Bohrung des Ventilgehäuses zur Aufnahme des Steuerkolbens als Durchgangsbohrung ausgebildet ist, so dass diese einfach und mit einer hohen Präzision hergestellt werden kann und auch die Entstehung von Graten zuverlässig vermieden ist. Eine exakte Vorgabe des Fußpunkts des Federelements erfolgt dann durch Einsetzen des Gehäuseeinsatzes in das Ventilgehäuse, wodurch die Position des Fußpunkts mit hoher Genauigkeit vorgegeben werden kann. Andererseits kann für unterschiedliche Steuerventile u. U. dasselbe Ventilgehäuse verwendet werden in Verbindung mit unterschiedlichen Gehäuseeinsätzen, unterschiedlichen Positionen des Gehäuseeinsatzes relativ zum Ventilgehäuse und/oder unterschiedlichen Anstützorten des Federelementes durch unterschiedliche Geometrien der eingesetzten Gehäuseeinsätze.

Erfindungsgemäß wird für eine einfache Ausgestaltung der Verbindung des Gehäuseeinsatzes mit dem Ventilgehäuse, die auch einfach zu montieren und ggf. zu demontieren ist, der Gehäuseeinsatz in das Ventilgehäuse "eingeklippst".

Der Gehäuseeinsatz ist im Längsschnitt ungefähr gemäß dem Längsschnitt eines Huts oder eines Topfs ausgebildet. Die "Krempe" des Huts oder der Rand des Topfs kann unter elastischer Verformung des Gehäuseeinsatzes radial komprimiert und expandiert werden, so dass der Rand oder die Krempe in eine geeignete Nut einer inneren Mantelfläche des Ventilgehäuses eingeklippst ist. Demgemäß muss zur Fertigung lediglich eine geeignet geformte Nut, ggf. mit mindestens einer Einführschräge, in die Mantelfläche des Ventilgehäuses eingebracht werden, während der Gehäuseeinsatz kostengünstig, beispielsweise als Blechteil oder Umformteil hergestellt werden kann. Für eine Förderung der elastischen Komprimierung und Expansion des Rands oder der Krempe in radialer Richtung können die zuvor erwähnten Ausnehmungen von Vorteil sein, die wie zuvor erwähnt radial elastische Stege oder Federlippen bilden.

Gemäß einem weiteren Vorschlag der Erfindung ist der an den Rand oder die Krempe angrenzende Mittenbereich des Huts konusförmig ausgebildet. Die gewünschte Verformung für ein Einklippsen des Gehäuseeinsatzes kann in diesem Fall über eine elastische Verformung des konusförmigen Mittenbereichs und/oder über eine Veränderung des Konuswinkels des Mittenbereichs herbeigeführt werden. Weiterhin bietet die konusförmige Ausbildung des Mittenbereichs verbesserte Möglichkeiten für eine Montage des Gehäuseeinsatzes in das Ventilgehäuse, was im Folgenden noch näher erläutert werden wird.

Gemäß einer besonderen Ausgestaltung des erfindungsgemäßen Steuerventils ist der Gehäuseeinsatz multifunktional dadurch ausgebildet, dass dieser neben der Abstützung des Fußpunkts für das Federelement Ausnehmungen aufweist, durch die das Druckmittel zur Bildung eines Anschlusses, insbesondere eines Tankanschlusses, aus dem Steuerventil austreten kann. Die Herstellung der Ausnehmungen in einem Gehäuseeinsatz ist gegenüber einer derartigen Herstellung für die Ausgestaltung mit Sacklochbohrung vereinfacht, wobei auch zusätzliche Gestaltungsmöglichkeiten für die Ausnehmungen, für die Zahl der Ausnehmungen und für deren Verteilung über den Gehäuseeinsatz gegeben sind. Beispielsweise können sich die Ausnehmungen von einem äußeren Rand des Gehäuseeinsatzes nach innen erstrecken, so dass zwischen den Ausnehmungen radial außenliegend Stege oder Federlippen gebildet sind, die vorteilhaft für eine Verbindung zwischen Gehäuseeinsatz und Ventilgehäuse verwendet werden können, während radial innenliegend u. U. ein geschlossener Zentralbereich des Gehäuseeinsatzes gegeben ist.

Gemäß einer Weiterbildung der Erfindung erfüllt der Gehäuseeinsatz neben der Funktion einer Abstützung eines Fußpunkts des Federelements sowie der Funktion der Bildung der Ausnehmungen für den Anschluss die zusätzliche Funktion einer Bereitstellung eines Anschlags für den Steuerkolben zur Vorgabe einer axialen Endlage des Steuerkolbens. Hierdurch ergibt sich eine definierte Endlage des Steuerkolbens, wodurch unzureichende gewünschte Offnungsstellungen zu einem der Anschlüsse vermieden sind. Gleichzeitig kann vermieden werden, dass ein Anschlag für den Steuerkolben lediglich durch ein "Auf-Block-Gehen" des Federelements bereitgestellt wird. Mit Hilfe des separat gefertigten und in das Ventilgehäuse eingesetzten Gehäuseeinsatzes kann die Position des Anschlags exakt vorgegeben werden. Durch geeignete Gestaltung der mechanischen Eigenschaften des Gehäuseeinsatzes und/oder der hydraulischen Eigenschaften im Bereich des Gehäuseeinsatzes kann eine Federwirkung und/oder Dämpfungswirkung für ein "Anschlagen" des Steuerkolbens an dem Anschlag erzielt werden.

Ein besonders kompakter Aufbau ergibt sich, wenn das Steuerventil geeignet für eine Integration in eine Nockenwelle ausgebildet ist. Weiterhin ergeben sich in diesem Fall u. U. kurze hydraulische Übertragungswege zwischen Steuerventil und den zugeordneten Arbeitskammern des Nockenwellenverstellers.

Zur Herstellung eines Steuerventils erfolgt zunächst ein Einbringen einer Bohrung in das Ventilgehäuse zumindest mit einer Länge, die eine Aufnahme sowohl eines Steuerkolbens als auch eines Gehäuseeinsatzes ermöglicht. Im einfachsten Fall handelt es sich bei dieser Bohrung um eine Durchgangsbohrung mit konstantem Querschnitt, wobei allerdings auch unterschiedliche Querschnittsgestaltungen über die Länge der Bohrung möglich sind. In einem anschließenden Arbeitsgang wird eine Nut in die Bohrung des Ventilgehäuses eingebracht, in welche später ein Gehäuseeinsatz eingeklippst werden kann. Hieran anschließend wird der Gehäuseeinsatz radial komprimiert. Eine derartige Komprimierung erfolgt vorzugsweise derart, dass der Außendurchmesser des Gehäuseeinsatzes geringer ist als der Durchmesser der Bohrung in dem Bereich, in dem der Gehäuseeinsatz in das Ventilgehäuse eingesetzt wird. In diesem Zustand wird dann der Gehäuseeinsatz in die Bohrung des Ventilgehäuses ungefähr bis in den Bereich der Nut eingebracht, wo der Gehäuseeinsatz dann radial expandiert wird, insbesondere durch elastische Kräfte des Gehäuseeinsatzes. In der "eingeklippsten Stellung" findet schließlich der radial außenliegende Rand des Gehäuseeinsatzes in der Nut des Ventilgehäuses Aufnahme. Das radiale Komprimieren und/oder das Einfügen des Gehäuseeinsatzes in die Nut kann durch geeignete Einführschrägen im Bereich des Ventilgehäuses unterstützt werden. Alternativ oder zusätzlich kann das Komprimieren und Expandieren durch geeignete Werkzeuge erfolgen.

Der Gehäuseeinsatz besitzt einen konusförmigen Mittenbereich, wobei der Gehäuseeinsatz unter Veränderung des Öffnungswinkels des konusförmigen Mittenbereichs radial elastisch expandiert und komprimiert wird.

Eine besonders einfache Montage ergibt sich, wenn der Gehäuseeinsatz in komprimiertem Zustand durch ein Werkzeug gehalten wird, welches den zuvor genannten verringerten Öffnungswinkel des Konus "festhält", bis der Gehäuseeinsatz in dem Ventilgehäuse an der geeigneten Stelle zur Expansion angeordnet ist.

Vorteilhafte Weiterbildungen der Erfindung ergeben sich aus den abhängigen Patentansprüchen und der gesamten Beschreibung. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche abweichend von den gewählten Rückbeziehungen ist ebenfalls möglich und wird hiermit angeregt. Dies betrifft auch solche Merkmale, die in separaten Zeichnungsfiguren dargestellt sind oder bei deren Beschreibung genannt werden. Diese Merkmale können auch mit Merkmalen unterschiedlicher Patentansprüche kombiniert werden.

### Kurze Beschreibung der Zeichnungen

In den Figuren zeigt:
- Figur 1: einen Längsschnitt durch eine Vorrichtung zur Veränderung der Steuerzeiten einer Brennkraftmaschine mit Druckmittelkreislauf,
- Figur 2: einen Querschnitt durch die in Figur 1 dargestellte Vorrichtung entlang der Linie II-II,
- Figur 3: einen Längsschnitt durch ein Steuerventil, das der Erfindung nicht entspricht,
- Figur 4: einen Längsschnitt durch eine zweite Ausführungsform eines Steuerventils, die der Erfindung nicht entspricht,
- Figur 5: einen Längsschnitt durch eine dritte Ausführungsform eines Steuerventils, die der Erfindung nicht entspricht,
- Figur 6: einen Längsschnitt durch eine vierte Ausführungsform eines Steuerventils, die der Erfindung nicht entspricht,
- Figur 7: einen Längsschnitt durch eine Ausgestaltung eines Steuerventils nach der Erfindung,
- Figur 8: das Steuerventil gemäß Figur 7 in einer durch einen Gehäuseeinsatz vorgegebenen Endlage,
- Figur 9: eine Vorderansicht eines Gehäuseeinsatzes,
- Figur 10: einen Längsschnitt eines Gehäuseeinsatzes und
- Figur 11: einen Montageschritt für ein Einsetzen des Gehäuseeinsatzes in das Ventilgehäuse mit einem Werkzeug zum Halten des Gehäuseeinsatzes in komprimiertem Zustand.

### Ausführliche Beschreibung der Zeichnung

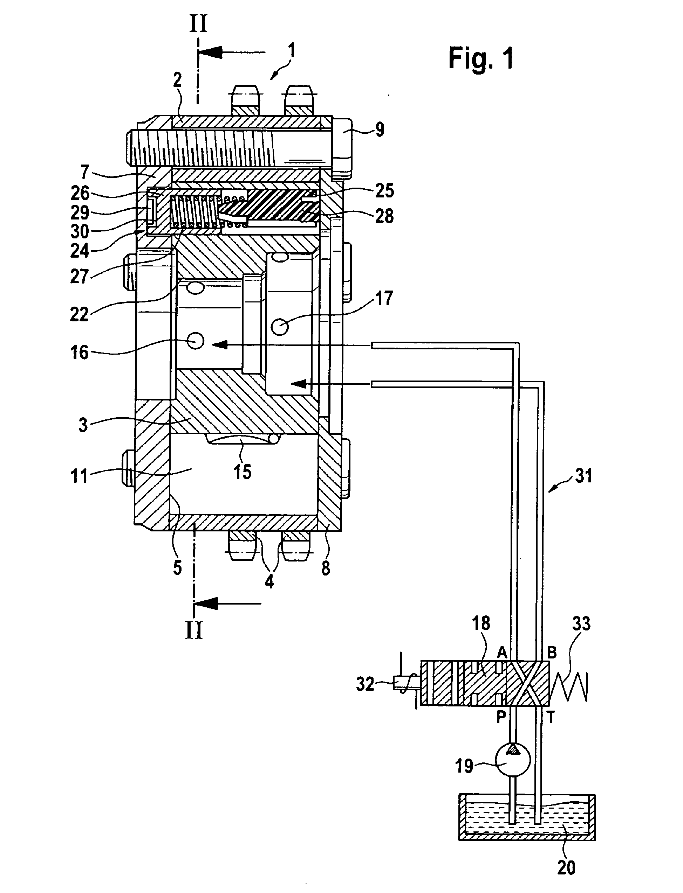

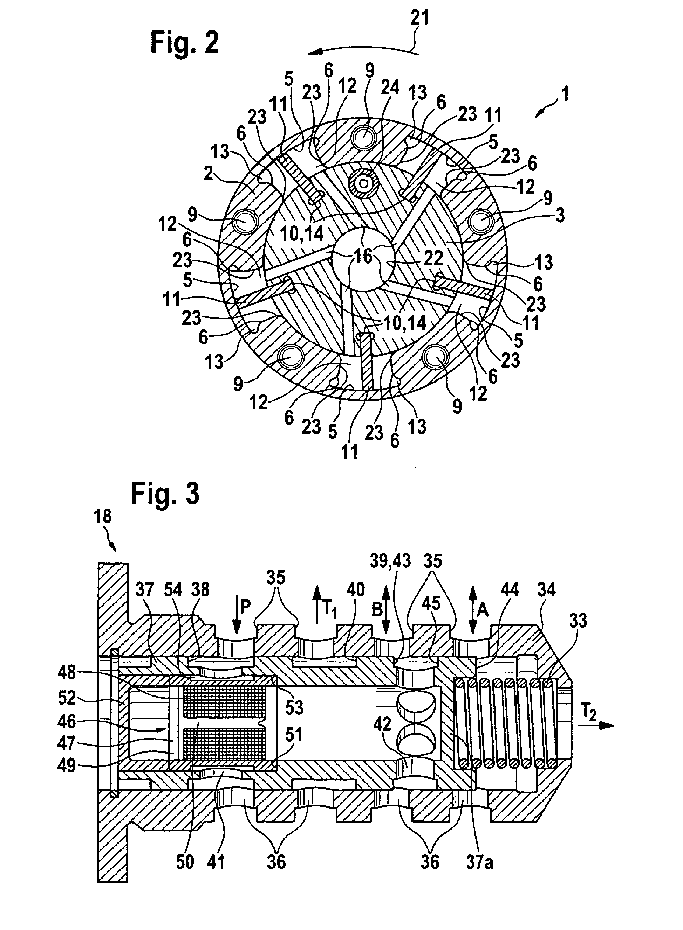

Die Figuren 1 und 2 zeigen eine Vorrichtung 1 zur Veränderung der Steuerzeiten einer Brennkraftmaschine. Die Vorrichtung 1 besteht im Wesentlichen aus einem Stator 2 und einem konzentrisch dazu angeordneten Rotor 3. Ein Antriebsrad 4 ist drehfest mit dem Stator 2 verbunden und in der dargestellten Ausführungsform als Kettenrad ausgeführt. Ebenso denkbar sind Ausführungsformen des Antriebsrads 4 als Riemen oder Zahnrad. Der Stator 2 ist drehbar auf dem Rotor 3 gelagert, wobei an der Innenmantelfläche des Stators 2 in der dargestellten Ausführungsform fünf in Umfangsrichtung beabstandete Ausnehmungen 5 vorgesehen sind. Die Ausnehmungen 5 werden in radialer Richtung vom Stator 2 und dem Rotor 3, in Umfangsrichtung von zwei Seitenwänden 6 des Stators 2 und in axialer Richtung durch einen ersten und einen zweiten Seitendeckel 7, 8 begrenzt. Jede der Ausnehmungen 5 ist auf diese Weise druckdicht verschlossen. Der erste und der zweite Seitendeckel 7, 8 sind mit dem Stator 2 mittels Verbindungselementen 9, beispielsweise Schrauben, verbunden.

An der Außenmantelfläche des Rotors 3 sind axial verlaufende Flügelnuten 10 ausgebildet, wobei in jeder Flügelnut 10 ein sich radial erstreckender Flügel 11 angeordnet ist. In jede Ausnehmung 5 erstreckt sich ein Flügel 11, wobei die Flügel 11 in radialer Richtung am Stator 2 und in axialer Richtung an den Seitendeckeln 7, 8 anliegen. Jeder Flügel 11 unterteilt eine Ausnehmung 5 in zwei gegeneinander arbeitende Druckkammern 12, 13. Um ein druckdichtes Anliegen der Flügel 11 am Stator 2 zu gewährleisten, sind zwischen den Nutgründen 14 der Flügelnuten 10 und den Flügeln 11 Blattfederelemente 15 angebracht, die den Flügel 11 in radialer Richtung mit einer Kraft beaufschlagen.

Mittels ersten und zweiten Druckmittelleitungen 16, 17 können die ersten und zweiten Druckkammern 12, 13 über ein Steuerventil 18 mit einer Druckmittelpumpe 19 oder einem Tank 20 verbunden werden. Dadurch wird ein Stellantrieb ausgebildet, der eine Relativverdrehung des Stators 2 gegenüber dem Rotor 3 ermöglicht. Dabei ist vorgesehen, dass entweder alle ersten Druckkammern 12 mit der Druckmittelpumpe 19 und alle zweiten Druckkammern 13 mit dem Tank 20 verbunden werden bzw. die genau entgegen gesetzte Konfiguration. Werden die ersten Druckkammern 12 mit der Druckmittelpumpe 19 und die zweiten Druckkammern 13 mit dem Tank 20 verbunden, so dehnen sich die ersten Druckkammern 12 auf Kosten der zweiten Druckkammern 13 aus. Daraus resultiert eine Verschiebung der Flügel 11 in Umfangsrichtung, in der durch den Pfeil 21 dargestellten Richtung. Durch das Verschieben der Flügel 11 wird der Rotor 3 relativ zum Stator 2 verdreht.

Der Stator 2 wird in der dargestellten Ausführungsform mittels eines an seinem Antriebsrad 4 angreifenden, nicht dargestellten Kettentriebs von der Kurbelwelle angetrieben. Ebenso denkbar ist der Antrieb des Stators 2 mittels eines Riemen- oder Zahnradtriebs. Der Rotor 3 ist kraft-, form- oder stoffschlüssig, beispielsweise mittels Presssitz oder durch eine Schraubverbindung mittels einer Zentralschraube, mit einer nicht dargestellten Nockenwelle verbunden. Aus der Relativverdrehung des Rotors 3 relativ zum Stator 2, als Folge des Zu- bzw. Ableitens von Druckmittel zu bzw. aus den Druckkammern 12, 13, resultiert eine Phasenverschiebung zwischen Nockenwelle und Kurbelwelle. Durch gezieltes Ein- bzw. Ableiten von Druckmittel in die Druckkammern 12, 13 können somit die Steuerzeiten der Gaswechselventile der Brennkraftmaschine gezielt variiert werden.

Die Druckmittelleitungen 16, 17 sind in der dargestellten Ausführungsform als im Wesentlichen radial angeordnete Bohrungen ausgeführt, die sich von einer Zentralbohrung 22 des Rotors 3 zur dessen äußerer Mantelfläche erstrecken. Innerhalb der Zentralbohrung 22 kann ein nicht dargestelltes Zentralventil angeordnet sein, über welches die Druckkammern 12, 13 gezielt mit der Druckmittelpumpe 19 bzw. dem Tank 20 verbunden werden können. Eine weitere Möglichkeit besteht darin, innerhalb der Zentralbohrung 22 einen Druckmittelverteiler anzuordnen, der die Druckmittelleitungen 16, 17 über Druckmittelkanäle und Ringnuten mit den Anschlüssen eines extern angebrachten Steuerventils 18 verbindet.

Die im Wesentlichen radial verlaufenden Seitenwände 6 der Ausnehmungen 5 sind mit Ausformungen 23 versehen, die in Umfangsrichtung in die Ausnehmungen 5 hineinreichen. Die Ausformungen 23 dienen als Anschlag für die Flügel 11 und gewährleisten, dass die Druckkammern 12, 13 mit Druckmittel versorgt werden können, selbst wenn der Rotor 3 eine seiner Extremstellungen relativ zum Stator 2 einnimmt, in denen die Flügel 11 an einer der Seitenwände 6 anliegen.

Bei ungenügender Druckmittelversorgung der Vorrichtung 1, beispielsweise während der Startphase der Brennkraftmaschine, wird der Rotor 3 aufgrund der Wechsel- und Schleppmomente, die die Nockenwelle auf diesen ausübt unkontrolliert relativ zum Stator 2 bewegt. In einer ersten Phase drängen die Schleppmomente der Nockenwelle den Rotor relativ zum Stator in eine Umfangsrichtung, die entgegengesetzt zur Drehrichtung des Stators liegt, bis diese an den Seitenwänden 6 anschlagen. Im Folgenden führen die Wechselmomente, die die Nockenwelle auf den Rotor 3 ausübt zu einem Hin- und Herschwingen des Rotors 3 und damit der Flügel 11 in den Ausnehmungen 5, bis zumindest eine der Druckkammern 12, 13 vollständig mit Druckmittel befüllt ist. Dies führt zu höherem Verschleiß und zu Geräuschentwicklungen in der Vorrichtung 1. Um dies zu verhindern ist in der Vorrichtung 1 ein Verriegelungselement 24 vorgesehen. Dazu ist in einer Axialbohrung 25 des Rotors 3 eint topfförmiger Kolben 26 angeordnet, welcher durch eine Feder 27 in axialer Richtung mit einer Kraft beaufschlagt wird. Die Feder 27 stützt sich in axialer Richtung auf der einen Seite an einer Entlüftungselement 28 ab und ist mit ihrem davon abgewandten axialen Ende innerhalb des topfförmig ausgeführten Kolbens 26 angeordnet. Im ersten Seitendeckel 7 ist eine Kulisse 29 derart ausgebildet, dass der Rotor 3 relativ zum Stator 2 in einer Position verriegelt werden kann, die der Position während des Starts der Brennkraftmaschine entspricht. In dieser Stellung wird der Kolben 26 bei ungenügender Druckmittelversorgung der Vorrichtung 1 mittels der Feder 27 in die Kulisse 29 gedrängt. Weiterhin sind Mittel vorgesehen, um den Kolben 26 bei ausreichender Versorgung der Vorrichtung 1 mit Druckmittel in die Axialbohrung 25 zurückzudrängen und damit die Verriegelung aufzuheben. Dies wird üblicherweise mit Druckmittel bewerkstelligt, welches über nicht dargestellte Druckmittelleitungen in eine Aussparung 30 geleitet wird, welche am deckelseitigen Stirnende des Kolbens 26 ausgebildet ist. Um Leckageöl aus dem Federraum der Axialbohrung 25 ableiten zu können ist das Entlüftungselement 28 mit axial verlaufenden Nuten versehen, entlang derer das Druckmittel zu einer Bohrung im zweiten Seitendeckel 8 geleitet werden kann.

In Figur 1 ist zusätzlich der Druckmittelkreislauf 31 dargestellt. Aus einem Tank 20 wird mittels einer Druckmittelpumpe 19 ein Druckmittelanschluss P eines Steuerventils 18 mit Druckmittel versorgt. Gleichzeitig wird über einen Tankanschluss T Druckmittel vom Steuerventil 18 in den Tank 20 geleitet. Das Steuerventil 18 besitzt weiterhin zwei Arbeitsanschlüsse A, B. Mittels eines elektromagnetischen Stellgliedes 32, das gegen die Federkraft eines ersten Federelements 33 wirkt, kann das Steuerventil 18 in drei Stellungen gebracht werden. In einer ersten Stellung des Steuerventils 18, die einem unbestromten Zustand des Stellgliedes 32 entspricht, wird der Arbeitsanschluss A mit dem Tankanschluss T und der Druckmittelanschluss P mit dem Arbeitsanschluss B und somit mit der zweiten Druckkammer 13 verbunden. In einer mittleren Stellung sind sowohl der Arbeitsanschluss A als auch der Arbeitsanschluss B sowohl vom Druckmittelanschluss P als auch vom Tankanschluss T getrennt. In einer dritten Stellung des Steuerventils 18 ist der Druckmittelanschluss P mit dem Arbeitsanschluss A und folglich mit der ersten Druckkammer 12 verbunden, während die zweite Druckkammer 13 über den Arbeitsanschluss B mit dem Tankanschluss T verbunden ist.

In Figur 3 ist ein Steuerventil 18 im Längsschnitt dargestellt. Das im wesentlichen hohlzylindrisch ausgeführte Ventilgehäuse 34 ist mit einem radialen Druckmittelanschluss P, einem radialen Tankanschluss T₁, zwei Arbeitsanschlüssen A, B und einem axialen Tankanschluss T₂ versehen. Die radialen Anschlüsse P, T₁, A, B sind als axial zueinander beabstandete erste Ringnuten 35 ausgebildet, die in die Außenmantelfläche des Ventilgehäuses 34 eingebracht sind. Die ersten Ringnuten 35 sind mit mehreren ersten Öffnungen 36 versehen, die in das Innere des Ventilgehäuses 34 münden.

Innerhalb des Ventilgehäuses 34 ist ein ebenfalls im Wesentlichen hohlzylindrisch ausgeführter Steuerkolben 37 axial verschiebbar angeordnet. Ein axiales Ende des Steuerkolbens ist mittels eines Wandabschnittes 37a druckdicht begrenzt. Der Wandabschnitt 37a kann einteilig mit dem Steuerkolben oder separat dazu ausgeführt sein. Mittels eines nicht dargestellten Stellgliedes 32 kann der Steuerkolben 37 gegen die Federkraft des ersten Federelements 33 innerhalb zweier Extremwerte in eine beliebige Position gebracht und gehalten werden.

Die Außenmantelfläche des Steuerkolbens 37 ist mit einer zweiten, einer dritten und einer vierten Ringnut 38, 39, 40 versehen. Die zweite und die dritte Ringnut 38, 39 kommunizieren über zweite und dritte Öffnungen 41, 42 mit dem Inneren des Steuerkolbens 37. Die zweite Ringnut 38 ist derart ausgebildet, dass sie in jeder Stellung des Steuerkolbens 37 relativ zum Ventilgehäuse 34 mit den ersten Öffnungen 36 der ersten Ringnut 35 des Druckmittelanschlusses P kommuniziert.

Während des Betriebs der Brennkraftmaschine gelangt Druckmittel vom Druckmittelanschluss P über die zweite Ringnut 38 und die zweiten Öffnungen 41 in das Innere des Steuerkolbens 37. In der in Figur 3 dargestellten ersten Stellung des Steuerkolbens 37 gelangt das Druckmittel über die dritten Öffnungen 42 und die dritte Ringnut 39 zum Arbeitsanschluss B. Durch Beaufschlagung der zweiten Druckkammern 13 über den Arbeitsanschluss B mit Druckmittel wird Druckmittel aus den zweiten Druckkammern 12 zum Arbeitsanschluss A verdrängt und gelangt über dessen erste Öffnungen 36 zum axial angeordneten Tankanschluss T₂.

Wird das elektromagnetische Stellglied 32 bestromt, so wird der Steuerkolben 37 gegen die Federkraft des ersten Federelements 33 verschoben. Als Folge nimmt die Überdeckung der ersten Öffnungen 36 des Arbeitsanschlusses B durch eine erste Steuerkante 43 der dritten Ringnut 39 zu. Gleichermaßen nimmt auch die Überdeckung der ersten Öffnungen 36 des Arbeitsanschlusses A durch eine zweite Steuerkante 44 des Steuerkolbens 37 zu. Erreicht der Steuerkolben 37 eine nicht dargestellte Mittenstellung so ist der Arbeitsanschluss A, durch vollständige Überdeckung der zweiten Steuerkante 44, nicht mehr mit dem axialen Tankanschluss T₂ verbunden. Weiterhin kommuniziert weder der Arbeitsanschluss A noch der Arbeitsanschluss B mit der dritten Ringnut 39. Alternativ kann der Steuerkolben 37 derart ausgeführt sein, dass in der Mittelstellung beide Arbeitsanschlüsse A, B mit der dritten Ringnut 39 kommunizieren.

Wird der Steuerkolben 37 weiter entgegen der Federkraft des ersten Federelements 33 verschoben so gibt eine dritte Steuerkante 45 die ersten Öffnungen 36 des Arbeitsanschlusses A zur dritten Ringnut 39 frei. Vom Druckmittelanschluss P einströmendes Druckmittel gelangt nun ausschließlich zum Arbeitsanschluss A. Gleichzeitig kommuniziert die vierte Ringnut 40 sowohl mit dem Arbeitsanschluss B als auch mit dem radialen Tankanschluss T₁. Auf diese Weise gelangt Druckmittel von der Druckmittelpumpe 19 in die ersten Druckkammern 12, was zu einer relativen Verdrehung des Rotors 3 zum Stator 2 führt. Das aus den zweiten Druckkammern 13 verdrängte Druckmittel gelangt über den Arbeitsanschluss B und die vierte Ringnut 40 zum radialen Tankanschluss T₁. Die dritte Steuerkante 45 und die vierte Ringnut 40 können derart ausgeführt sein, dass während der Verschiebung des Steuerkolbens 37 zuerst der Arbeitsanschluss A mit der Druckmittelpumpe 19 und dann der Arbeitsanschluss B mit dem Tank 20 verbunden werden. Alternativ könne auch beide Verbindungen gleichzeitig hergestellt werden.

Innerhalb des Steuerkolbens 37 ist ein im Wesentlichen zylindrisch ausgeführter Filter 46 angeordnet. Der Filter 46 besteht aus einem Rahmen 47, vorzugsweise aus Kunststoff, und mindestens einem Filterabschnitt 48. Der Filterabschnitt 48 besteht vorzugsweise aus einem Geflecht aus Plastik oder Metall, wobei der Rahmen 47 unlösbar mit den Filterabschnitten 48 verbunden ist. Der Rahmen 47 weist an den axialen Enden des Filters 46 jeweils ein im Wesentlichen kreisförmiges Segment 49 auf, wobei die kreisförmigen Segmente 49 über mehrere Längsstreben 50 miteinander verbunden sind. Mittels der kreisförmigen Segmente 49 ist der Filter 46 innerhalb des Steuerkolbens 37 kraftschlüssig fixiert. Dabei ist es vorteilhaft innerhalb des Steuerkolbens 37 einen Axialanschlag 51 auszubilden, der als Wegbegrenzung beim Einpressen des Filters 46 in den Steuerkolben 37 dient. Alternativ kann der Filter 46 weggesteuert eingepresst werden.

Der Filter 46 ist im Bereich der zweiten Öffnungen 41 angeordnet und überdeckt diese komplett. An einem axialen Ende des Filters 46 liegt dieser am Axialanschlag 51 an. Das andere axiale Ende stützt sich an einer topfförmigen Hülse 52 ab, die im Inneren des Steuerkolbens 37 kraftschlüssig fixiert ist. Auf diese Weise wird gewährleistet, dass der Filter 46 während des Betriebs der Brennkraftmaschine die Position hält. Die Hülse 52 verschließt weiterhin den Steuerkolben 37 in axialer Richtung und kann als Angriffspunkt einer nicht dargestellten Stößelstange des Stellglieds 32 dienen.

Die kreisförmigen Segmente 49 des Filters 46 sind in radialer Richtung druckdicht mit einer inneren Mantelfläche 53 des Steuerkolbens 37 verbunden, während zwischen den Längsstreben 50 und der inneren Mantelfläche 53 ein Spalt 54 vorgesehen ist.

Vom Druckanschluss P einströmendes Druckmittel gelangt über die zweiten Öffnungen 41 in eine zwischen den Filterabschnitten 48 und der inneren Mantelfläche 53 ausgebildete, um den Filter 46 umlaufende Ringnut. Das Druckmittel tritt über die Filterabschnitte 48 in das Innere des Steuerkolbens 37 ein, wodurch eventuell im Druckmittel vorhandene Verunreinigungen effektiv von den Steuerkanten 43, 44, 45 ferngehalten werden.

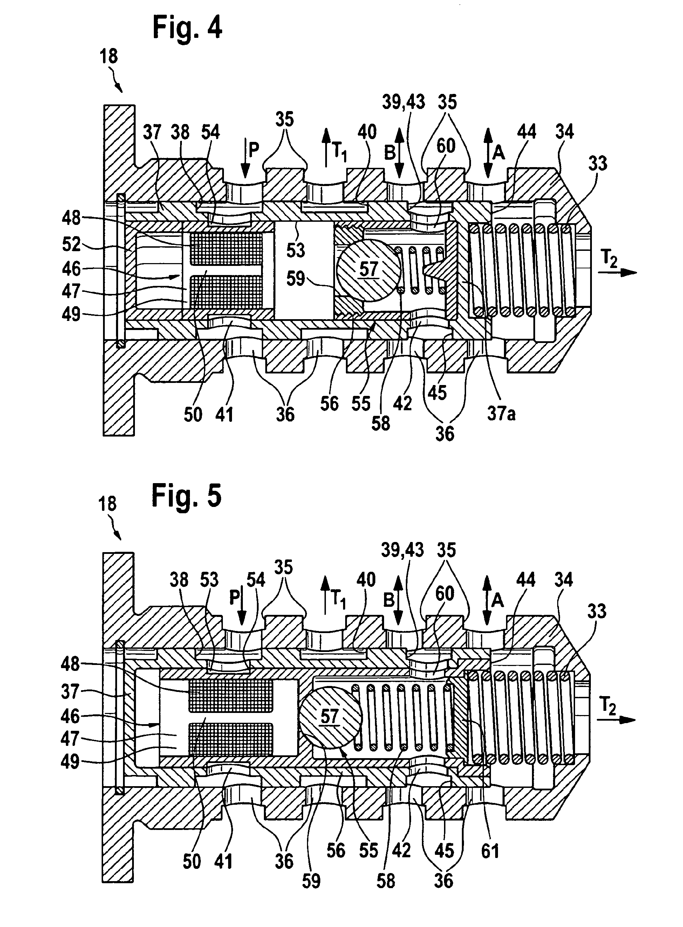

In Figur 4 ist eine weitere Ausführungsform eines Steuerventils 18 dargestellt. Ausführung und Funktion dieser Variante sind nahezu identisch zur ersten Ausführungsform. Im Unterschied zur ersten Ausführungsform ist hier in der inneren Mantelfläche 53 des Steuerkolbens 37 kein Axialanschlag 51 ausgebildet. Der Filter 46 wird während der Montage des Steuerventils 18 weggesteuert in den Steuerkolben 37 eingepresst. Zwischen dem Filter 46 und den Arbeitsanschlüssen A, B ist in dieser Ausführungsform ein Rückschlagventil 55 angeordnet. Dieses besteht aus einem Gehäuse 56, welches kraftschlüssig innerhalb des Steuerkolbens 37 angeordnet ist. Innerhalb des Gehäuses 56 befindet sich ein Sperrkörper 57, der mittels eines zweiten Federelements 58 in einen Sitz 59 des Rückschlagventils 55 gepresst wird. Anstatt des hier dargestellten Kugelrückschlagventils können auch andere Ausführungsformen, beispielsweise ein Plattenrückschlagventil verwendet werden.

In das Steuerventil 18 einströmendes Druckmittel gelangt nach Durchlaufen des Filters 46 zum Rückschlagventil 55. Durch die Anordnung des Filters 46 direkt nach dem Druckanschluss P werden die Steuerkanten 43, 44, 45 und das Rückschlagventil 55 effektiv vor Beschädigungen durch Schmutzpartikel im Druckmittel geschützt. Ab einem gewissen Druck innerhalb des Steuerkolbens 37 wird der Sperrkörper 57 gegen die Federkraft des zweiten Federelements 58 verschoben und Druckmittel kann über im Gehäuse 56 angebrachte vierte Öffnungen 60 und die dritten Öffnungen 42 zu den Arbeitsanschlüssen A, B gelangen.

Während des Betriebs der Brennkraftmaschine werden aufgrund der Wechselmomente der Nockenwelle Druckpulsationen innerhalb der Vorrichtung 1 generiert. Dabei treten Druckspitzen auf, die in das Hydrauliksystem übertragen werden und andere Verbraucher schädigen können. Die Anordnung eines Rückschlagventils 55 zwischen den Druckkammern 12, 13 und dem Druckmittelanschluss P verhindert eine Übertragung dieser Druckspitzen in das Hydrauliksystem. Dadurch werden sowohl die Druckmittelpumpe 19 als auch weitere an diesem Druckmittelkreislauf angeschlossene Verbraucher geschützt. Vorteilhafterweise ist in dieser Ausführungsform das Rückschlagventil 55 innerhalb des Steuerkolbens 37 angeordnet und benötigt so keinen zusätzlichen Bauraum. Ein weiterer Vorteil liegt darin, dass, speziell bei Verwendung des Steuerventils 18 als Zentralventil, die Strecke zwischen dem Ort an dem die Druckpulsationen entstehen und dem Rückschlagventil 55 minimal ist. Druckschwankungen werden praktisch am Entstehungsort abgefangen.

In Figur 5 ist eine weitere Ausführungsform eines Steuerventils 18 dargestellt. Ausführungsform und Funktion dieses Steuerventils 18 sind nahezu identisch zu der in Figur 4 gezeigten Variante. Vorteilhafterweise ist in dieser Ausführungsform der Filter 46 innerhalb des Gehäuses 56 des Rückschlagventils 55 angeordnet. Das Gehäuse 56 kann als preisgünstiges Kunststoffformteil ausgeführt sein. Durch die Integration des Filters 46 in das Gehäuse 56 des Rückschlagventils 55 wird der Montageaufwand beim Zusammenbau des Steuerventils 18 erheblich verringert. Es muss nur noch ein Bauteil innerhalb des Steuerkolbens 37 positioniert und befestigt werden.

In dieser Ausführungsform ist das dem Tankanschluss T₂ abgewandte stirnseitige Ende des Steuerkolbens 37 verschlossen ausgeführt. Das Gehäuse 56 ist im Längsschnitt H-förmig ausgeführt, wobei in der einen Kammer des H der Filter 46 und in der anderen Kammer der Sperrkörper 57 mit dem zweiten Federelement 58 angeordnet ist. Das zweite Federelement 58 stützt sich an einem Verschluss 61 ab. Der radial Verlaufende Teil des Gehäuses 56 ist mit einer dem Sperrkörper 57 angepassten Öffnung versehen und dient als Sitz 59.

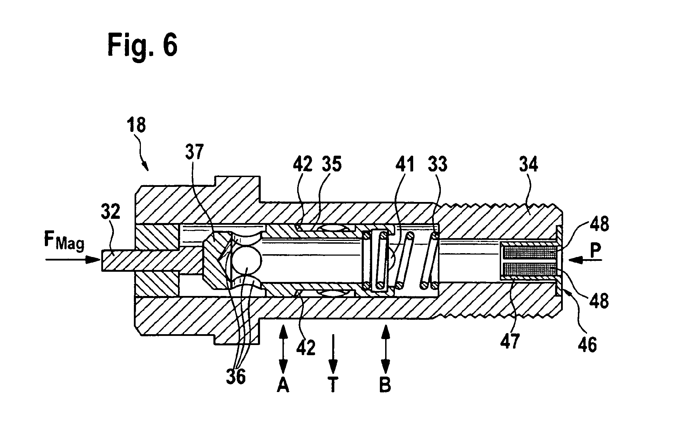

Figur 6 zeigt eine vierte Variante eines Steuerventils 18, in der innerhalb eines im Wesentlichen hohlzylindrisch ausgeführten Ventilgehäuses 34 ein Steuerkolben 37 axial verschiebbar angeordnet ist. Der Steuerkolben 37 ist ebenfalls im Wesentlichen hohlzylindrisch ausgeführt, wobei die dem axial gerichteten Druckmittelanschluss P zugewandte Stirnseite offen ausgeführt ist. Die äußere Mantelfläche des Steuerkolbens 37 ist mit einer ersten Ringnut 35 und einer Gruppe erster Öffnungen 36 versehen.

Während des Betriebs der Brennkraftmaschine tritt über den axial gerichteten Druckmittelanschluss P Druckmittel in das Innere des Ventilgehäuses 34 ein. Abhängig von der Stellung des Steuerkolbens 37 innerhalb des Ventilgehäuses 34 gelangt das Druckmittel entweder über zweite Öffnungen 41 zum Arbeitsanschluss B oder über dritte Öffnungen 42 zum Arbeitsanschluss A. Gleichzeitig ist der jeweils nicht mit Druckmittel beaufschlagte Arbeitsanschluss A, B über die erste Ringnut 35 mit dem Tankanschluss T verbunden.

Zwischen dem Druckmittelanschluss P und den Arbeitsanschlüssen A, B ist ein Filter 46 angeordnet. Der Filter 46 ist topfförmig ausgeführt und besteht aus einem Rahmen 47 und Filterabschnitten 48. Der Rahmen 47 ist an der dem Druckanschluss P zugewandten Seite mit einem sich radial erstreckender Kragen versehen, der als Axialanschlag des Filters 46 dient. Darüber hinaus ist es möglich den Filter 46 form-, kraft- oder stoffschlüssig am Ventilgehäuse 34 zu fixieren. Wie in den vorher beschriebenen Ausführungsformen kann auch hier ein Rückschlagventil 55 zwischen dem Druckmittelanschluss P und den Arbeitsanschlüssen A, B angeordnet werden.

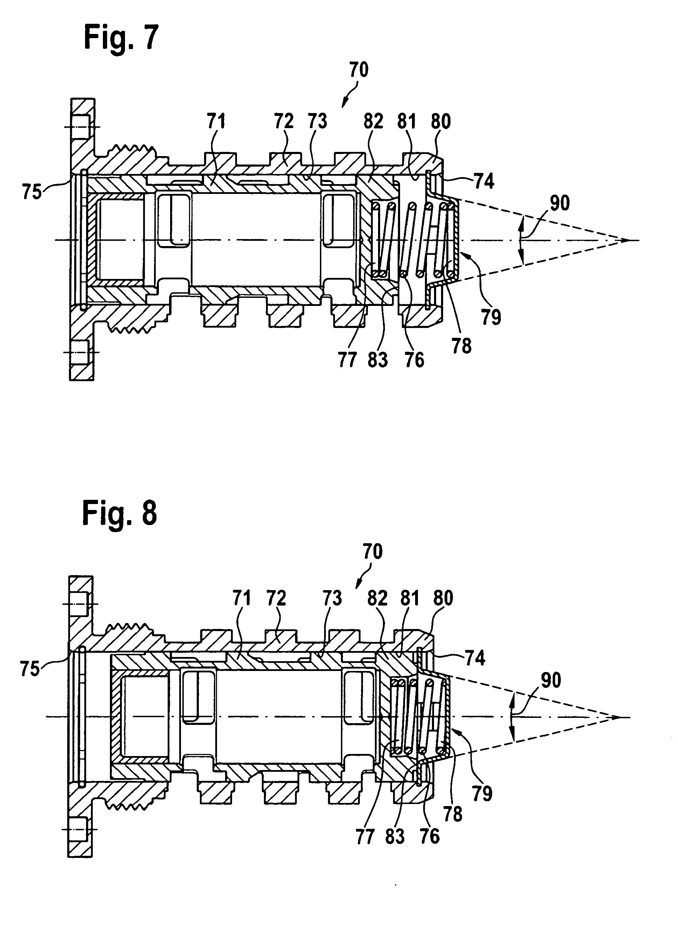

Ein erfindungsgemäßes Steuerventil 70 weist einen Steuerkolben 71 auf, der in einem Ventilgehäuse 72 axial verschieblich angeordnet ist. Beispielsweise sind das Steuerventil 70, der Steuerkolben 71 entsprechend einem der in den Figuren 1 bis 6 dargestellten Ausführungsbeispiele ausgebildet. Allerdings ist die Bohrung 73 des Ventilgehäuses 72 gemäß Fig. 7 als Durchgangsbohrung mit konstantem Durchmesser ausgebildet mit endseitigen, sich nach außen erweiternden Fasen 74, 75. Eine Druckfeder 76, die im Wesentlichen dem Federelement 33 in den Ausführungsbeispielen Figur 1 bis Figur 6 entspricht, besitzt einen Fußpunkt 77, der an einer Stirnseite des Steuerkolbens 71 abgestützt ist, sowie einen Fußpunkt 78, der sich an einem Gehäuseeinsatz 79 abstützt. Der Gehäuseeinsatz 79 ist in eine Nut 80 der inneren Mantelfläche 81 des Ventilgehäuses 72 eingeklippst. Im Bereich der an dem Fußpunkt 77 anliegenden Stirnfläche des Steuerkolbens 71 umgibt der Steuerkolben 71 mit einem Ringansatz 82 radial die Druckfeder 76, wodurch u. U. die Druckfeder 76 geführt ist. Des Weiteren kragt von dem Ringansatz 82 in Richtung des Gehäuseeinsatzes 79 ein Anschlag 83, hier mit einer ringförmigen Anschlagfläche, aus, der in der in Figur 8 skizzierten Endlage des Steuerventils 70 zur Anlage an den Gehäuseeinsatz 79 kommt.

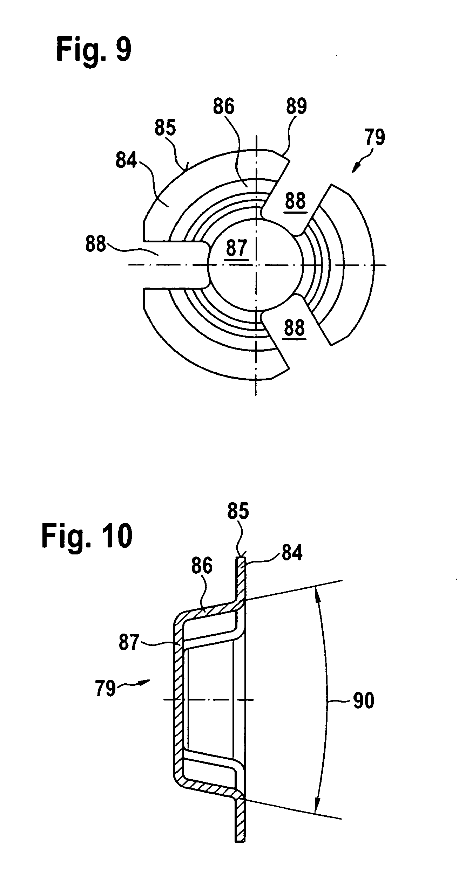

Figur 9 zeigt den Gehäuseeinsatz 79 in einer Vorderansicht, während Figur 10 einen Längsschnitt des Gehäuseeinsatzes 79 zeigt. Der Gehäuseeinsatz 79 ist im Wesentlichen in der Form eines Topfes oder Hutes ausgebildet mit
- einer kreisringförmigen Krempe 84 mit einem radial außenliegenden Rand 85, der Aufnahme in der Nut 80 findet,
- einem konusförmigen Mittenbereich 86 und
- einem ungefähr kreisförmigen Zentralbereich 87.

In dem Mittenbereich 86 ist, wie in Figur 7 dargestellt, die Druckfeder 78 aufgenommen, so dass u. U. der Gehäuseeinsatz 79 die Druckfeder 76 radial führen kann. Von dem Rand 85 erstrecken sich radial nach innen gemäß Figur 9 drei Einschnitte oder Ausnehmungen 88, die
- für das in Figur 9 dargestellte Ausführungsbeispiel ungefähr rechteckförmig sind,
- ungefähr im Zentralbereich 78 bzw. dem Rand desselben enden und
- gleichmäßig über den Umfang verteilt sind.

Im Übergangsbereich zwischen den Ausnehmungen 88 und dem Rand 85 sind Ringecken 89 oder Abschrägungen vorgesehen, die zusammen mit der übrigen Gestalt des Gehäuseeinsatzes 79 ein Verhaken des Gehäuseeinsatzes 79 in dem Ventilgehäuse bei einer Montage vermeiden sollen. Der konusförmige Mittenbereich 86 besitzt einen Öffnungswinkel 90. Für eine elastische radiale Komprimierung des Gehäuseeinsatzes 79 verringert sich der Öffnungswinkel 90 und/oder der Mittenbereich 86 wird elastisch verformt. Bei einer radialen Expansion zum Einklippsen des Gehäuseeinsatzes 79 in die Nut 80 vergrößert sich der Öffnungswinkel 90 wieder.

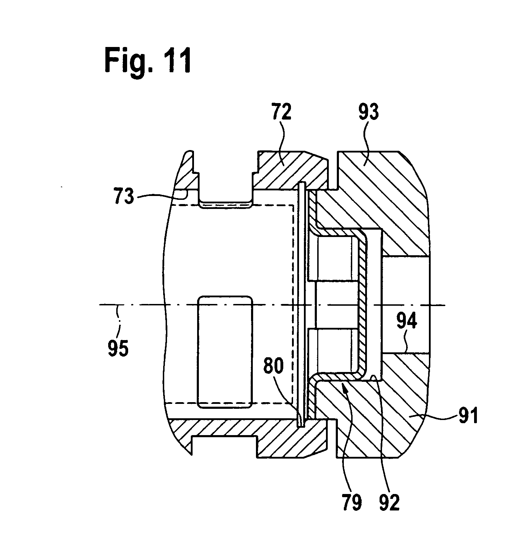

Vorzugsweise wird der Gehäuseeinsatz 79 mit einem Werkzeug 91 gemäß Figur 11 in das Ventilgehäuse 72 eingebracht werden. Das Werkzeug 91 ist rotationssymmetrisch zur Längsachse 95-95 ausgebildet. Das Werkzeug 91 besitzt eine zentrale Sacklochbohrung, die zylindrisch oder kegelig ausgebildet sein kann. In jedem Fall ist der Öffnungswinkel der Sacklochbohrung 92 kleiner als der Öffnungswinkel 90 des Gehäuseeinsatzes 79 in expandiertem Zustand. Folglich wird der konusförmige Mittenbereich radial außenliegend gegen die Innenfläche der Sacklochbohrung gepresst und in dieser reibschlüssig gehalten. Demgemäß kann der Gehäuseeinsatz 79 in radial komprimiertem Zustand in die Sacklochbohrung 92 eingesetzt werden, wobei der Außendurchmesser des Gehäuseeinsatzes 79 ungefähr dem Durchmesser der Bohrung 73 entspricht oder kleiner ist als dieser. In diesem Zustand kann der Gehäuseeinsatz 79 über das Werkzeug 91, wie in Figur 11 dargestellt, in das Ventilgehäuse 72 eingesetzt werden. Hierbei kann ein Absatz 93 des Werkzeugs 91 vorgeben, wie weit das Werkzeug 91 mit dem Gehäuseeinsatz 79 in das Ventilgehäuse 72 eingeschoben werden kann. Befindet sich der Gehäuseeinsatz 79 ungefähr im Bereich der Nut 80, kann der Gehäuseeinsatz 79 aus dem Werkzeug 91 ausgeschoben oder ausgeworfen werden. Hierbei kann durch eine in die Sacklochbohrung 92 mündende Längsbohrung 94 eingeschobene Hilfseinrichtung eine Ausschiebekraft auf den Gehäuseeinsatz 79 aufgebracht werden. Ist die Sacklochbohrung 92 nicht zylindrisch, sondern konisch ausgebildet, kann sich mit einem Verschieben kontinuierlich der radiale Außendurchmesser des Gehäuseeinsatzes 79 vergrößern.

Die Ausnehmungen 88 bilden einen Strömungsquerschnitt zum Anschluss, beispielsweise in Richtung des Tanks. Wesentlich ist hierbei eine geeignete Wahl des Verhältnisses zwischen den Strömungsquerschnitten am Port B im Steuerventil 70 und den Ausnehmungen 88. Ist der Ausströmquerschnitt, der durch die Ausnehmungen 88 vorgegeben wird, zu klein im Vergleich zu den Strömungsquerschnitten der anderen beteiligten Anschlüsse, so kann sich in dem Ventil ein unerwünschter Staudruck aufbauen.

Eine Zuführung des Gehäuseeinsatzes 79 für einen Montageprozess kann kontinuierlich, beispielsweise über einen Schwingförderer, erfolgen. Durch eine geeignete Wahl der Geometrie des Gehäuseeinsatzes, der Blechdicke, der Vorgabe der Rundungen und der Öffnungswinkel 90 sowie des Materials und geeigneter Materialbehandlungen kann die notwendige Kraft zum Verformen des Gehäuseeinsatzes 79 und die erzielbare Sicherungswirkung durch Einklippsen des Gehäuseeinsatzes 79 in die Nut 80 konstruktiv vorgegeben werden. Vorzugsweise wird die mechanische Festigkeit des Gehäuseeinsatzes 79 und/oder die Oberflächenhärte, insbesondere im Auflagebereich der Druckfeder 76, durch ein Einsatzhärten und Anlassen vergrößert.

### Bezugszeichen

- 1: Vorrichtung
- 2: Stator
- 3: Rotor
- 4: Antriebsrad
- 5: Ausnehmungen
- 6: Seitenwand
- 7: erster Seitendeckel
- 8: zweiter Seitendeckel
- 9: Verbindungselement
- 10: Flügelnut
- 11: Flügel
- 12: erste Druckkammer
- 13: zweite Druckkammer
- 14: Nutgrund
- 15: Blattfederelement
- 16: erste Druckmittelleitung
- 17: zweite Druckmittelleitung
- 18: Steuerventil
- 19: Druckmittelpumpe
- 20: Tank
- 21: Pfeil
- 22: Zentralbohrung
- 23: Ausformungen
- 24: Verriegelungselement
- 25: Axialbohrung
- 26: Kolben
- 27: Feder
- 28: Entlüftungselement
- 29: Kulisse
- 30: Aussparung
- 31: Druckmittelkreislauf
- 32: Stellglied
- 33: erstes Federelement
- 34: Ventilgehäuse
- 35: erste Ringnut
- 36: erste Öffnungen
- 37: Steuerkolben
- 37a: Wandabschnitt
- 38: zweite Ringnut
- 39: dritte Ringnut
- 40: vierte Ringnut
- 41: zweite Öffnung
- 42: dritte Öffnung
- 43: erste Steuerkante
- 44: zweite Steuerkante
- 45: dritte Steuerkante
- 46: Filter
- 47: Rahmen
- 48: Filterabschnitt
- 49: Segment
- 50: Längsstreben
- 51: Axialanschlag
- 52: Hülse
- 53: Mantelfläche
- 54: Spalt
- 55: Rückschlagventil
- 56: Gehäuse
- 57: Sperrkörper
- 58: zweites Federelement
- 59: Sitz
- 60: vierte Öffnung
- 61: Verschluss
- 70: Steuerventil
- 71: Steuerkolben
- 72: Ventilgehäuse
- 73: Bohrung
- 74: Fase
- 75: Fase
- 76: Druckfeder
- 77: Fußpunkt links
- 78: Fußpunkt rechts
- 79: Gehäuseeinsatz
- 80: Nut
- 81: Mantelfläche
- 82: Ringansatz
- 83: Anschlag
- 84: Krempe
- 85: Rand
- 86: Mittenbereich
- 87: Zentralbereich
- 88: Ausnehmungen
- 89: Ringecke
- 90: Öffnungswinkel
- 91: Werkzeug
- 92: Sacklochbohrung
- 93: Absatz
- 94: Bohrung
- 95: Längsachse
- P: Druckmittelanschluss
- T: Tankanschluss
- T₁: radialer Tankanschluss
- T₂: axialer Tankanschluss
- A: erster Arbeitsanschluss
- B: zweiter Arbeitsanschluss

## Patentansprüche

1. Steuerventil für eine Beeinflussung der Beaufschlagung eines Nockenwellenverstellers einer Brennkraftmaschine mit einem Druckmittel mit
- einem Ventilgehäuse (72),
- einem in dem Ventilgehäuse (72) angeordneten und axial unter Beaufschlagung eines Federelements (76) verschiebbaren Steuerkolben (71) und
- einem Druckmittelanschluss (P), einem Tankanschluss (T) und zwei Arbeitsanschlüssen (A, B),
wobei
- für eine axiale Position des Steuerkolbens (71) ein erster Arbeitsanschluss (A) mit dem oder einem Tankanschluss (T2) und der zweite Arbeitsanschluss (B) mit dem Druckmittelanschluss (P) verbindbar sind, während für eine andere axiale Position des Steuerkolbens (71) der zweite Arbeitsanschluss (B) mit dem oder einem Tankanschluss (T1) und der erste Arbeitsanschluss (A) mit dem Druckmittelanschluss (P) verbindbar sind,
- sich das Federelement (76) mit dem dem Steuerkolben (71) gegenüberliegenden Fußpunkt (78) an einem Gehäuseeinsatz (79) abstützt,
**dadurch gekennzeichnet, dass**
der Gehäuseeinsatz (79) im Längsschnitt ungefähr gemäß dem Längsschnitt eines Huts oder eines Topfs ausgebildet ist und die "Krempe" (84) des Huts oder der Rand (85) des Topfs in eine Nut (80) einer inneren Mantelfläche (81) des Ventilgehäuses (72) eingeklippst ist.

2. Steuerventil nach Anspruch 1, **dadurch gekennzeichnet, dass** der Gehäuseeinsatz (79) Ausnehmungen (88) aufweist, durch die das Druckmittel zur Bildung eines Anschlusses (T2) aus dem Steuerventil (70) austreten kann.

3. Steuerventil nach Anspruch 2, **dadurch gekennzeichnet, dass** sich die Ausnehmungen (88) von einem äußeren Rand (85) des Gehäuseeinsatzes (79) nach innen erstrecken.

4. Steuerventil nach einem der vorhergehenden Ansprüche, **dadurch gekennzeichnet, dass** der an die Krempe (84) angrenzende Mittenbereich (86) des hutförmigen Gehäuseeinsatzes (79) konusförmig ausgebildet ist.

5. Steuerventil nach einem der vorhergehenden Ansprüche, **dadurch gekennzeichnet, dass** der Durchmesser einer Bohrung (73) zur Aufnahme des Gehäuseeinsatzes (79) ungefähr dem Durchmesser des Bereichs zur axial verschieblichen Aufnahme des Steuerkolbens (71) entspricht.

6. Steuerventil nach einem der vorhergehenden Ansprüche, **dadurch gekennzeichnet, dass** der Gehäuseeinsatz (79) einen Anschlag (83) für den Steuerkolben (71) bildet zur Vorgabe einer axialen Endlage des Steuerkolbens (71).

7. Steuerventil nach einem der vorhergehenden Ansprüche, **dadurch gekennzeichnet, dass** das Steuerventil (70) geeignet für eine Integration in eine Nockenwelle ausgebildet ist.

8. Verfahren zur Herstellung eines Steuerventils nach einem der Ansprüche 1 bis 7 für eine Beeinflussung der Beaufschlagung eines Nockenwellenverstellers einer Brennkraftmaschine mit folgenden Verfahrensschritten:
a) Herstellen eines Gehäuseeinsatzes (79) in Form eines "Hutes" mit einem konusförmigen Mittenbereich (86),
b) Einbringen einer Bohrung (73) in das Ventilgehäuse (72) zumindest mit einer Länge, die eine Aufnahme sowohl eines Steuerkolbens (71) als auch eines Gehäuseeinsatz (79) ermöglicht,
c) Einbringen einer Nut (80) in die Bohrung (73) des Ventilgehäuses (72),
d) radiales Komprimieren des Gehäuseeinsatzes (79) unter Veränderung des Öffnungswinkels (90) des konusförmigen Mittenbereiches (86),
e) Einbringen des Gehäuseeinsatzes (79) in radial komprimiertem Zustand in die Bohrung (73) des Ventilgehäuses (72) und
f) radiales Expandieren des Gehäuseeinsatzes (72) derart, dass der radial außenliegende Rand (85) des Gehäuseeinsatzes (79) in der Nut (80) des Ventilgehäuses (72) Aufnahme findet.

9. Verfahren nach Anspruch 8, **dadurch gekennzeichnet, dass** die Bohrung (73) in Form einer Durchgangsbohrung in das Ventilgehäuse (72) eingebracht wird.

10. Verfahren nach Anspruch 8, **dadurch gekennzeichnet, dass** für ein Einbringen des Gehäuseeinsatzes (79) in das Ventilgehäuse (72) der Gehäuseeinsatz (79) mit verringertem Öffnungswinkel (90) des konusförmigen Mittenbereichs (86) in einem Werkzeug (91) gehalten wird.

## Claims

1. Control valve for influencing the action of a pressure medium on a camshaft adjuster of an internal combustion engine, having
- a valve housing (72),
- a control piston (71) which is arranged in the valve housing (72) and is axially displaceable under the action of a spring element (76), and
- a pressure medium port (P), a tank port (T) and two working ports (A, B),
wherein
- for one axial position of the control piston (71), a first working port (A) can be connected to the or a tank port (T2), and the second working port (B) can be connected to the pressure medium port (P), while for another axial position of the control piston (71), the second working port (B) can be connected to the or a tank port (T1) and the first working port (A) can be connected to the pressure medium port (P),
- the spring element (76) is supported, by means of the foot point (78) situated at the opposite side from the control piston (71), on a housing insert (79),
**characterized in that**,
in longitudinal section, the housing insert (79) is approximately in the form of the longitudinal section of a hat or of a pot, and the "brim" (84) of the hat or the edge (85) of the pot is clipped into a groove (80) of an inner lateral surface (81) of the valve housing (72).

2. Control valve according to Claim 1, **characterized in that** the housing insert (79) has recesses (88), through which the pressure medium can pass out of the control valve (70) in order to form a port (T2).

3. Control valve according to Claim 2, **characterized in that** the recesses (88) extend inwards from an outer edge (85) of the housing insert (79).

4. Control valve according to one of the preceding claims, **characterized in that** the mid-region (86) of the hat-shaped housing insert (79) is conical, said mid-region (86) adjoining the brim (84).

5. Control valve according to one of the preceding claims, **characterized in that** the diameter of a bore (73) for holding the housing insert (79) approximately corresponds to the diameter of the region for holding the control piston (71) in an axially displaceable fashion.

6. Control valve according to one of the preceding claims, **characterized in that** the housing insert (79) forms a stop (83) for the control piston (71), in order to predefine an axial end position of the control piston (71).

7. Control valve according to one of the preceding claims, **characterized in that** the control valve (70) is suitable for being integrated into a camshaft.

8. Method for producing a control valve according to one of Claims 1 to 7 for influencing the action on a camshaft adjuster of an internal combustion engine, having the following method steps:
a) producing a housing insert (79) in the form of a "hat", with a conical mid-region (86),
b) forming a bore (73) in the valve housing (72), said bore (73) being at least of a length which permits it to hold both a control piston (71) and also a housing insert (79),
c) forming a groove (80) in the bore (73) of the valve housing (72),
d) radially compressing a housing insert (79) by changing the opening angle (90) of the conical mid-region (86),
e) inserting the housing insert (79), in the radially compressed state, into the bore (73) of the valve housing (72) and
f) radially expanding the housing insert (72) in such a way that the radially outer edge (85) of the housing insert (79) is received in the groove (80) of the valve housing (72).

9. Method according to Claim 8, **characterized in that** the bore (73) is formed in the valve housing (72) in the form of a through bore.

10. Method according to Claim 8, **characterized in that**, in order to insert the housing insert (79) into the valve housing (72), the housing insert (79) is held in a tool (91) such that the opening angle (90) of the conical mid-region (86) is reduced.

## Revendications

1. Vanne de commande pour influencer la sollicitation d'un déphaseur d'arbre à came d'un moteur à combustion interne avec un fluide de pression, comprenant
- un boîtier de vanne (72),
- un piston de commande (71) disposé dans le boîtier de vanne (72) et pouvant être déplacé axialement par la sollicitation d'un élément de ressort (76) et
- un raccord de fluide de pression (P), un raccord de réservoir (T) et deux raccords de travail (A, B),
- pour une position axiale du piston de commande (71), un premier raccord de travail (A) pouvant être connecté au ou à un raccord de réservoir (T2) et le deuxième raccord de travail (B) pouvant être connecté au raccord de fluide de pression (P), tandis que pour une position axiale différente du piston de commande (71), le deuxième raccord de travail (B) pouvant être connecté au ou à un raccord de réservoir (T1) et le premier raccord de travail (A) pouvant être connecté au raccord de fluide de pression (P),
- l'élément de ressort (76) s'appuyant avec la partie de base (78) opposée au piston de commande (71) contre un insert du boîtier (79),
**caractérisée en ce que**
l'insert du boîtier (79) est réalisé en coupe longitudinale approximativement suivant la coupe longitudinale d'un chapeau ou d'un pot, et le "rebord" (84) du chapeau ou le bord (85) du pot est enclipsé dans une rainure (80) d'une surface d'enveloppe intérieure (81) du boîtier de vanne (72).

2. Vanne de commande selon la revendication 1, **caractérisée en ce que** l'insert du boîtier (79) présente des évidements (88) à travers lesquels le fluide de pression peut sortir de la vanne de commande (70) pour former un raccord (T2).

3. Vanne de commande selon la revendication 2, **caractérisée en ce que** les évidements (88) s'étendent vers l'intérieur depuis un bord extérieur (85) de l'insert du boîtier (79).

4. Vanne de commande selon l'une quelconque des revendications précédentes, **caractérisée en ce que** la région centrale (86) de l'insert du boîtier (79) en forme de chapeau, adjacente au rebord (84), est réalisée sous forme conique.

5. Vanne de commande selon l'une quelconque des revendications précédentes, **caractérisée en ce que** le diamètre d'un alésage (73) pour recevoir l'insert du boîtier (79) correspond approximativement au diamètre de la région pour recevoir le piston de commande (71) de manière déplaçable axialement.

6. Vanne de commande selon l'une quelconque des revendications précédentes, **caractérisée en ce que** l'insert du boîtier (79) forme une butée (83) pour le piston de commande (71) pour prédéfinir une position de fin de course axiale du piston de commande (71).

7. Vanne de commande selon l'une quelconque des revendications précédentes, **caractérisée en ce que** la vanne de commande (70) est réalisée de manière appropriée pour une intégration dans un arbre à came.

8. Procédé de fabrication d'une vanne de commande selon l'une quelconque des revendications 1 à 7, pour influencer la sollicitation d'un déphaseur d'arbre à came d'un moteur à combustion interne, comprenant les étapes de procédé suivantes :
a) fabrication d'un insert de boîtier (79) en forme de "chapeau", avec une région centrale (86) de forme conique,
b) perçage d'un alésage (73) dans le boîtier de vanne (72) au moins sur une longueur qui permet de recevoir à la fois un piston de commande (71) et un insert du boîtier (79),
c) réalisation d'une rainure (80) dans l'alésage (73) du boîtier de vanne (72),
d) compression radiale de l'insert du boîtier (79) en modifiant l'angle d'ouverture (90) de la région centrale (86) de forme conique,
e) introduction de l'insert du boîtier (79) dans l'état comprimé radialement dans l'alésage (73) du boîtier de vanne (72), et
f) expansion radiale de l'insert du boîtier (79) de telle sorte que le bord (85) situé radialement à l'extérieur de l'insert du boîtier (79) se loge dans la rainure (80) du boîtier de vanne (72).

9. Procédé selon la revendication 8, **caractérisé en ce que** l'alésage (73) est réalisé sous forme d'alésage traversant dans le boîtier de vanne (72).

10. Procédé selon la revendication 8, **caractérisé en ce que** pour une introduction de l'insert du boîtier (79) dans le boîtier de vanne (72), l'insert du boîtier (79) est maintenu dans un outil (91) avec un angle d'ouverture (90) réduit de la région centrale (86) de forme conique.
